# EUROPÄISCHE PATENTSCHRIFT

(11) **EP 1 148 209 B1**
(45) Veröffentlichungstag und Bekanntmachung des Hinweises auf die Patenterteilung: **30.05.2007**
(21) Anmeldenummer: 01109020.6
(22) Anmeldetag: 11.04.2001
(51) Int. Cl.: F01D 11/02, F01D 11/00

(54) **Zwischenstufendichtungsanordnung**
Interstage seal configuration
Configuration de joint inter-étages

(30) Priorität: 19.04.2000 DE 10019440
(43) Veröffentlichungstag der Anmeldung: 24.10.2001
(73) Patentinhaber: Rolls-Royce Deutschland Ltd & Co KG, 15827 Dahlewitz (DE)
(72) Erfinder: Briesenick, Jan, 12437 Berlin (DE); Friedl, Winfried-Hagen, 12305 Berlin (DE)
(74) Vertreter: Weber, Joachim

(56) Entgegenhaltungen:
- WO-A-96/28642
- US-A- 3 529 904
- US-A- 3 807 891
- US-A- 4 084 919
- US-A- 4 113 406

## Beschreibung

Die Erfindung betrifft einen Zwischenstufendichtungsträger für eine Hochdruckturbine eines Strahltriebwerks mit seinem Lagerbereich an Leitschaufelschienen.

Insbesondere bei Hochdruckturbinen ist es erforderlich, geeignete Maßnahmen zu ergreifen, um eine Abdichtung zwischen einem Rotor und einem Stator zu schaffen. Hierbei ist im Rahmen der vorliegenden Erfindung insbesondere der Bereich vor der zweiten Turbinenstufe von besonderem Interesse. Aus dem Stand der Technik ist es bekannt, an den radial innen liegenden Endbereichen der Leitschaufeln einen Zwischenstufendichtungsträger zu befestigen. Dieser ist in geeigneter Weise ausgebildet, um die auch zur Dichtung dienende Luft aus einem Zwischenscheibenraum in den Bereich zwischen Stator und Rotor zu leiten.

Bei der aus dem Stand der Technik bekannten Lösung ist ein Zwischenstufendichtungsträger gegenüber den Leitschaufeln radial frei beweglich mittels einer sogenannten Speichenzentrierung aufgehängt. Dies ermöglicht gegenüber anderen, aus dem Stand der Technik bekannten, festverschraubten oder genieteten Lösungen ein besseres thermisches und spannungsseitiges Verhalten des Dichtungsträgers und somit der Dichtung zwischen Stator und Rotor. Um die freie Bewegung zu ermöglichen, muss ein axiales Spiel zwischen den Leitschaufelschienen und dem Zwischenstufendichtungsträger vorhanden sein. Dieses Spiel kann zu Dichtungsproblemen und Leckage führen. Deshalb erfolgt die Abdichtung zwischen den Leitschaufelschienen und dem Zwischenstufendichtungsträger über eine Nut, welche am äußeren Umfang des Zwischenstufendichtungsträgers ausgebildet ist. Diese Nut umfasst eine vordere und eine hintere Wandung, zwischen welche die einzelnen Leitschaufelschienen eingesetzt werden. Dabei wird auch eine Linienauflage zwischen den Leitschaufelschienen und der umlaufenden Ring-Nut gebildet. Die Linienauflage kann beim Stand der Technik sowohl an der Vorder- als auch an der Rückseite der Nut, das heißt an der vorderen Wandung oder an der hinteren Wandung erfolgen, abhängig von der Druckdifferenz über den Zwischenstufendichtungsträger in dem Zwischenscheibenraum. Weiterhin wird bei der aus dem Stand der Technik bekannten Konstruktion durch einen kleinen Spalt zwischen den Leitschaufelschienen und der Nut eine sekundäre Dichtwirkung erreicht, falls die Last auf die Linienauflage nicht stark genug sein sollte und sich somit keine ausreichende Dichtwirkung einstellen sollte. Es ist somit unerheblich, ob sich die Richtung der Drucklast ändert oder sehr klein ist. Diese Konstruktion wird vorwiegend bei Niederdruckturbinen, bei welchen die Druckdifferenz nur klein und sehr variabel ist, eingesetzt. Bei Hochdruckturbinen können sich jedoch höhere Druckdifferenzen ergeben.

Aus der GB 2 222 856 A ist eine Dichtungsanordnung für eine Gasturbine bekannt, bei welcher ein Dichtungsträger fest mittels Bolzen, Nieten oder in anderer Form befestigt ist. Die Dichtwirkung zwischen einer Leitschaufelschiene und einem Zwischenstufendichtungsträger erfolgt somit über die Verbindungselemente und einen Kraft/Formschluss zwischen der Leitschaufelschiene und nur einer einzigen Wandung am Zwischenstufendichtungsträger. Es liegt somit ein anderes technisches Grundprinzip zu Grunde, bei welchem weder eine Speichenzentrierung noch eine zusätzliche, zweite Ringwandung erforderlich ist.

Ein Nachteil der vorbekannten Konstruktion liegt darin, dass es sehr aufwendig ist, die Ringnut mit hoher Passgenauigkeit herzustellen. Der Zwischenstufendichtungsträger muss hierzu in geeigneter Weise mechanisch bearbeitet werden. Die Folge sind hohe Herstellungskosten.

Ein weiterer, wesentlicher Nachteil ergibt sich aus dem Zusammenbau beziehungsweise der Montage der Leitschaufeln an dem Zwischenstufendichtungsträger. Da die Passungstoleranzen der Nut sehr eng sind, müssen die Leitschaufelschienen passgenau eingesetzt werden.

Zusätzlich ergibt sich der Nachteil eines relativ hohen Gesamtgewichts.

Die US 3,529,904 zeigt, dass an Statorschaufeln eine Leitschaufelschiene ausgebildet ist, an welcher ein Zwischenstufendichtungsträger radial bewegbar gelagert ist. Dabei sind an dem Zwischenstufendichtungsträger zwei zueinander parallele Rippen vorgesehen, die gemeinsam einen Schlitz bilden, in welchem die Leitschaufelschiene aufgenommen ist.

Die US 4,113,406 zeigt Statorschaufeln mit einem Flansch, der zwischen radial nach außen vorstehende Flansche eines Dichtungsträgers eingespannt ist. Auch bei dieser Konstruktion erfolgt die Anordnung des Flansches in einem Schlitz, so dass eine beidseitige Abstützung des Flansches erfolgt.

Die WO 96/28642 A beschreibt eine Dichtungsanordnung, welche an einem Schaufelring gelagert ist. Die Dichtungsanordnung umfasst eine Ringwandung, die in Strömungsrichtung vor dem Schaufelflansch angeordnet ist. Die Befestigung und Sicherung der Leitschaufelschiene erfolgt durch einen zusätzlichen Schienenring unter Zwischenlegung von Abstandselementen.

Der Erfindung liegt die Aufgabe zugrunde, einen Zwischenstufendichtungsträger der genannten Art so auszubilden, dass er bei einfacher und kostengünstiger Herstellbarkeit im Gewicht reduziert werden kann und bei hoher Lebensdauer zuverlässig arbeitet.

Erfindungsgemäß wird die Aufgabe durch die Merkmale des Patentanspruchs gelöst.

Im Rahmen der Erfindung ist somit vorgesehen, dass der Lagerbereich nur eine in Strömungsrichtung vor den Leitschaufelschienen angeordnete Ringwandung umfasst, welche gegen die Leitschaufelschienen anliegt.
Die erfindungsgemäße Ausgestaltung zeichnet sich durch eine Reihe erheblicher Vorteile aus.

Der Zwischenstufendichtungsträger weist somit lediglich eine vordere Ringwandung auf, welche zur Abdichtung zwischen den Leitschaufelschienen und dem Zwischenstufendichtungsträger dient. Es hat sich herausgestellt, dass bei der hier betrachteten Hochdruckturbine immer eine große Druckdifferenz über den Zwischenstufendichtungsträger vorliegt, die im Betrieb ständig eine ausreichende Drucklast gegen die Leitschaufelschienen bewirkt. Dies bedeutet, dass die vordere Ringwand stets gegen die Leitschaufelschienen gedrückt wird. Die Druckdifferenz, welche beispielsweise bei sechs bar liegt, hat sich als ausreichend erwiesen, um eine zuverlässige Dichtung im Bereich einer Linienauflage zu gewährleisten.

Der erfindungsgemäße Zwischenstufendichtungsträger gewährleistet somit mit nur einer Ringwandung eine ausreichende Dichtwirkung.

Durch den Verzicht auf zwei Wandungen mit einer zwischengeschalteten Nut, so wie dies aus dem Stand der Technik bekannt ist, ergibt sich somit bei der Erfindung eine ganz erhebliche Gewichtsreduzierung, welche für den Zwischenstufendichtungsträger in einem Bereich von 500 g liegen kann.

Da es weiterhin nicht mehr erforderlich ist, die Leitschaufelschienen in eine enge Passnut einzusetzen, vereinfacht sich erfindungsgemäß die Montage ganz erheblich.

Erfindungsgemäß ist es vorteilhaft, dass die vordere Ringwandung mit Ausnehmungen zur Durchführung von Führungsstiften versehen ist. Diese Führungsstifte halten den Zwischenstufendichtungsträger an den Leitschaufelschienen.

Um eine zuverlässige Fixierung der Führungsstifte zu gewährleisten, ist es besonders günstig, dass in Strömungsrichtung hinter der Leitschaufelschiene an dem Lagerbereich Befestigungsaugen zur Aufnahme der Führungsstifte angeordnet sind. Diese Führungsaugen haben keine Dichtungsfunktion, sondern dienen lediglich zur mechanischen Halterung. Infolgedessen können sie gewichtssparend ausgebildet sein, ihre äußeren Oberflächen brauchen nicht oder nur geringfügig passgenau bearbeitet werden.

Da erfindungsgemäß die vordere Ringwand gegen die Leitschaufelschienen anliegt, ist es lediglich nötig, die Anlagefläche der Ringwandung maßgenau herzustellen. Es muss keine Passnut erzeugt werden. Hierdurch vermindern sich die Herstellungskosten für den Zwischenstufendichtungsträger ganz erheblich. Hinzu kommt, dass der erfindungsgemäße Zwischenstufendichtungsträger in einfacher Weise als Gussteil hergestellt werden kann, während die aus dem Stand der Technik bekannten Lösungen meist eine umfangreiche spanende Bearbeitung erfordern.

Im Folgenden wird die Erfindung anhand eines Ausführungsbeispiels in Verbindung mit der Zeichnung beschrieben. Dabei zeigt:
- Fig. 1:: eine vereinfachte Teil-Ansicht einer Leitschaufelschiene einer zweiten Stufe einer Hochdruckturbine gemäß dem Stand der Technik,
- Fig. 2:: eine vergrößerte Detailansicht der in Fig. 1 gezeigten Ausgestaltung der Leitschaufelschiene,
- Fig. 3:: eine vergrößerte Detail-Ansicht der erfindungsgemäßen Ausgestaltung der Leitschaufelschiene in analoger Darstellung zu Fig. 2,
- Fig. 4:: eine Teil-Seitenansicht der erfindungsgemäßen Leitschaufelschiene,
- Fig. 5:: eine vergrößerte Darstellung der erfindungsgemäßen Ringwandung der Leitschaufelschiene mit Vergleich zu der aus dem Stand der Technik bekannten Ausgestaltung,
- Fig. 6:: eine Teil-Schnittansicht der in Fig. 3 gezeigten Anordnung, in Darstellung senkrecht zur Bildebene der Fig. 3, und
- Fig. 7:: eine vergrößerte Detailansicht des in Fig. 3 gezeigten Führungsstifts.

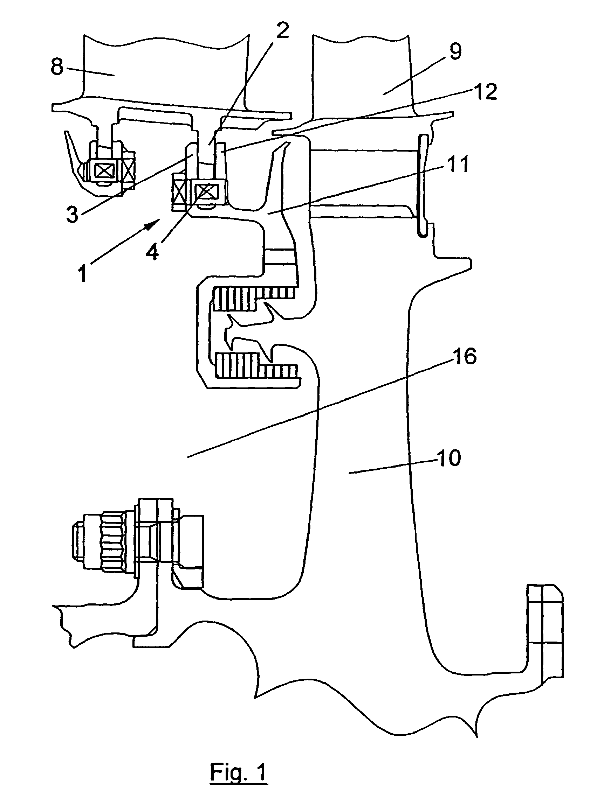

In Fig. 1 ist ein Teilbereich einer zweiten Stufe einer Hochdruckturbine dargestellt. Von einem Leitschaufelkranz ist lediglich der radial innen liegende Fußbereich gezeigt, welcher eine sich in Umfangsrichtung erstreckende, im Querschnitt rechteckige Leitschaufelschiene 2 umfasst. Mit dem Bezugszeichen 9 ist der radial innen liegende Fußbereich einer Laufschaufel bezeichnet, die an einer Turbinenscheibe 10 befestigt ist.

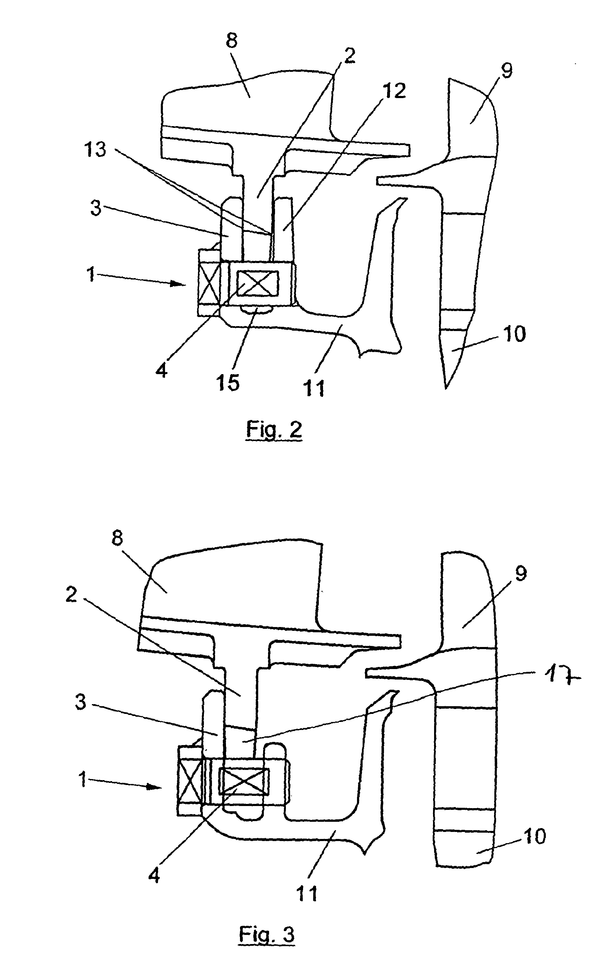

Ein im Wesentlichen ringförmiger Zwischenstufendichtungsträger 11 umfasst einen Lagerbereich 1. Zur Aufnahme und Halterung der Leitschaufelschienen 2 weist dieser, wie in den Fig. 1 und 2 gezeigten, bei der aus dem Stand der Technik bekannten Ausgestaltung eine vordere Ringwandung 3 sowie eine hintere Ringwandung 12 auf. Durch die Ringwandungen 3 und 12 wird eine Pass-Nut gebildet, in welche die Leitschaufelschiene 2 eingesetzt ist. Hierdurch ergeben sich, wie in Fig. 2 gezeigt, Linienauflagen 13.

Mittels mehrerer am Umfang verteilter Führungsstifte 4 erfolgt eine Halterung der Leitschaufelschiene 2.

Auf eine Beschreibung des restlichen Aufbaus des Zwischenstufendichtungsträgers 11 kann an dieser Stelle verzichtet werden, da dieser Aufbau entweder für die Erfindung unerheblich oder aus dem Stand der Technik vorbekannt ist.

In Fig. 3 ist die erfindungsgemäße Ausgestaltung des Zwischenstufendichtungsträgers 11 beziehungsweise dessen Lagerbereichs 1 dargestellt. Erfindungsgemäß umfasst der Zwischenstufendichtungsträger 11 lediglich eine vordere Ringwandung 3, welche gegen die Leitschaufelschienen 2 anliegt.

Eine Fixierung in radialer und Umfangsrichtung erfolgt in üblicher Weise über die Führungsstifte 4.

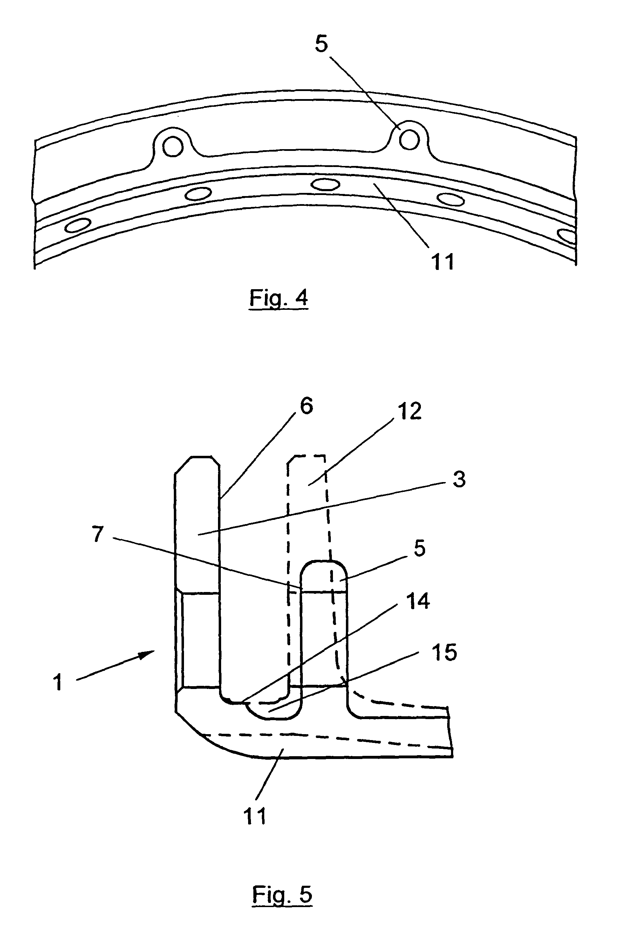

Die radiale Halterung des Zwischenstufendichtungsträgers 11 während der Montage oder bei Auftreten von Vibrationen erfolgt somit über die Führungsstifte 4. Diese sind an ihrem in Strömungsrichtung hinten liegenden Ende zusätzlich durch Befestigungsaugen 5 geführt, die an dem Zwischenstufendichtungsträger 11 ausgebildet sind, siehe insbesondere Fig. 4.

Wie sich aus Fig. 3 und 5 ergibt, erfolgt die Anlage der Leitschaufelschienen 2 gegen eine hintere Fläche 6 der Ringwandung 3. Es ist deshalb lediglich erforderlich, diese hintere Fläche 6 passgenau zu bearbeiten, wobei diese Bearbeitung, wie in Fig. 5 gezeigt, auch den Nutgrund 14 teilweise umfasst. Eine beispielsweise gusstechnisch erzeugte Nut 15 schließt sich an die mechanisch zu bearbeitenden Flächen 6 und 14 an.

Da, wie aus Fig. 5 ersichtlich ist, der Abstand der hinteren Fläche 6 von einer vorderen Fläche 7 des Befestigungsauges 5 größer ist, als beim Stand der Technik, ergibt sich keine sehr enge Passung, sodass sowohl die Herstellung als auch die Montage vereinfacht werden. Die Fig. 5 zeigt gestrichelt im Vergleich die hintere Ringwandung 12 des Stands der Technik.

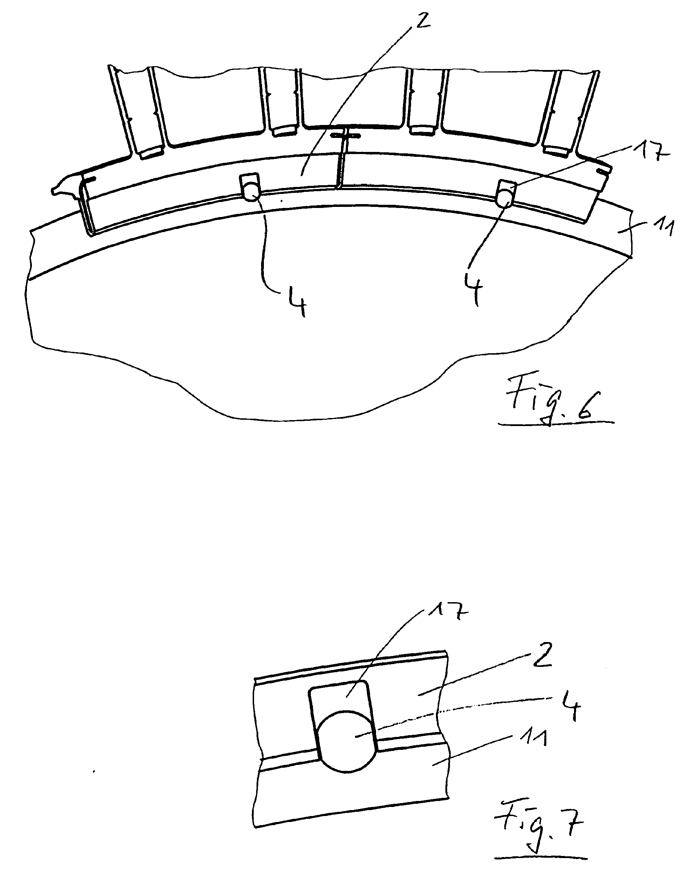

Die Fig. 6 zeigt eine Schnittansicht in einer senkrecht zur Bildebene stehenden Ebene, bezogen auf die Darstellung der Fig. 3. Dabei ist deutlich zu ersehen, dass in den Leitschaufelschienen 2 radial erstreckende Schlitze 17 ausgebildet sind, in welchen die Führungsstifte 4 radial beweglich sind. Insbesondere aus der Darstellung der Fig. 7 ergibt sich, dass die Seitenflächen der Führungsstifte 4 beidseitig mit einer Fläche versehen sind, um den Führungsstift 4 passgenau in den Schlitz zu führen. Durch diese radial frei bewegliche Aufhängung, welche auch als Speichen-Zentrierung bezeichnet wird, ergibt sich ein verbessertes thermisches und spannungsseitiges Verhalten des Dichtungsträgers und somit eine verbesserte Dichtung zwischen Stator und Rotor. Es handelt sich somit um eine radial frei bewegliche Speichenzentrierung. Durch eine entsprechende Anzahl an Führungsstiften 4 erfolgt die Zentrierung des Zwischenstufendichzungsträgers 11.

### Bezugszeichenliste:

- 1: Lagerbereich
- 2: Leitschaufelschiene
- 3: Ringwandung
- 4: Führungsstift
- 5: Befestigungsauge
- 6: Hintere Fläche der Ringwandung 3
- 7: Vordere Fläche des Befestigungsauges 5
- 8: Leitschaufel
- 9: Laufschaufel
- 10: Turbinenscheibe
- 11: Zwischenstufendichtungsträger
- 12: Hintere Ringwandung
- 13: Linienauflage
- 14: Nutgrund
- 15: Nut
- 16: Zwischenscheibenraum
- 17: Schlitz

## Patentansprüche

1. Zwischenstufendichtungsanordnung für eine Hochdruckturbine eines Strahltriebwerks mit einem Lagerbereich (1) an Leitschaufelschienen (2), wobei ein Zwischenstufendichtungsträger (11) radial bewegbar an der Leitschaufelschiene (2) gelagert ist, wobei der Lagerbereich (1) nur eine in Strömungsrichtung vor den Leitschaufelschienen (2) angeordnete Ringwandung (3) umfasst, welche gegen die Leitschaufelschienen (2) anliegt, wobei die vordere Ringwandung (3) mit Ausnehmungen zur Durchführung von Führungsstiften (4) versehen ist, und der Abstand der hinteren Fläche (6) der Ringwandung (3) von der vorderen Fläche (7) des Befestigungsauges (5) eine Aufnahme der Leitschaufelschienen (2) mit Spiel erlaubt, **dadurch gekennzeichnet, dass** in Strömungsrichtung hinter den Leitschaufelschienen (2) an dem Lagerbereich (1) Befestigungsaugen (5) zur Aufnahme der Führungsstifte (4) angeordnet sind, **dass** der Zwischenstufendichtungsträger (11) als Gussteil gefertigt ist und **dass** im Bereich des Lagerbereiches (1) nur die in Strömungsrichtung hintere Fläche (6) der Ringwandung (3) spanend bearbeitet wird.

## Claims

1. Interstage sealing arrangement for a high-pressure jet-engine turbine having its supporting area (1) on vane retainers (2), with an interstage seal carrier (11) being located in a radially movable way on the vane retainer (2), with the supporting area (1) comprising only one single annular wall (3) upstream of the vane retainers (2) in flow direction, this wall abutting the vane retainers (2), with the annular front wall (3) being provided with openings for the installation of locating pins (4), and with the distance between the rear face (6) of the annular wall (3) and the front face (7) of the mounting boss (5) allowing for installation of the vane retainers (2) with tolerance, **characterised in that** mounting bosses (5) for the installation of the locating pins (4) are provided downstream of the vane retainers (2) in the direction of flow in the supporting area (1), that the interstage seal carrier (11) is produced as a casting and that in the supporting area (1) only the rear face (6) of the annular wall (3) in the direction of flow is machined by metal cutting.

## Revendications

1. Configuration de joint interétage pour une turbine haute pression d'un réacteur dont la zone de logement (1) se trouve sur des rails d'aubes fixes (2), sachant qu'un support de joint interétage (11) est logé de manière mobile dans le sens radial sur le rail d'aube fixe (2), que la zone de logement (1) ne comprend qu'une seule paroi annulaire (3) en amont des rails d'aubes fixes (2) dans le sens d'écoulement, qui s'appuie contre les rails d'aubes fixes, que la paroi annulaire avant (3) est munie d'évidements permettant l'introduction d'ergots de guidage (4), et que la distance entre la surface arrière (6) de la paroi annulaire (3) et la surface avant (7) de l'oeillet de fixation (5) permet de recevoir les rails d'aubes fixes (2) avec jeu, **caractérisée en ce que** dans la zone de logement (1) en aval des rails d'aubes fixes (2) dans le sens d'écoulement sont disposés des oeillets de fixation (5) pour recevoir les ergots de guidage (4), que le support de joint interétage (11) est fabriqué comme pièce moulée et que dans la zone de logement (1) uniquement la surface arrière (6) de la paroi annulaire (3) dans le sens d'écoulement est usinée par enlèvement de copeaux.
